# EUROPEAN PATENT APPLICATION

(11) **EP 4 024 520 A1**
(43) Date of publication of application: **06.07.2022**
(21) Application number: 20945562.5
(22) Date of filing: 08.12.2020
(51) Int. Cl.: H01M 4/36

(54) **COBALT-FREE POSITIVE ELECTRODE MATERIAL AND PREPARATION METHOD THEREFOR, LITHIUM ION BATTERY POSITIVE ELECTRODE, AND LITHIUM ION BATTERY**

(30) Priority: 14.07.2020 CN 202010677212
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); SUN, Mingzhu, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN); CHEN, Sixian, hangzhou, Jiangsu 213200 (CN); WANG, Pengfei, hangzhou, Jiangsu 213200 (CN)
(74) Representative: Cabinet Beaumont
(86) International application number: PCT/CN2020/134519
(87) International publication number: WO 2022/011939

(57) **Abstract**

A cobalt-free positive electrode material and a preparation method therefor, a lithium ion battery positive electrode, and a lithium ion battery, relating to the technical field of lithium ion batteries. The positive electrode material comprises a core and a shell covering the core, the core being a cobalt-free positive electrode material, the chemical formula of the core being LiNiₓMn_{y}O₂, wherein 0.55≤x≤0.95 and 0.05≤y≤0.45, and the shell is a coating agent and carbon. The present method can improve the dispersibility of the cobalt-free positive electrode material during the coating process, and can also improve the conductivity of the cobalt-free positive electrode material.

## Description

### TECHNICAL FIELD

The present disclosure relates to the technical field of lithium-ion batteries, for example, a cobalt-free positive electrode material, a method for preparing the same, a positive electrode of a lithium-ion battery and a lithium battery.

### BACKGROUND

At present, increasingly high requirements are imposed on the safety, range and cost of lithium-ion power batteries in the field of new energy vehicles. Among four main materials of a power battery, the performance of a positive electrode material is critical to the overall performance of the battery and the cost of the positive electrode material accounts for 30-40% of the total cost of the power battery. Therefore, to improve the performance of the battery and reduce the cost of the battery, it is necessary to improve the performance of the positive electrode material and reduce the cost of the positive electrode material.

Cobalt element in lithium nickel manganese cobalt oxides (NCM) positive electrodes widely applied at present is expensive and easy to cause environmental pollution so that the content of cobalt in a ternary positive electrode material needs to be reduced or the material needs to be free of cobalt. However, due to a relatively small primary particle size and a D50 of 2-4 um, a sheet-like cobalt-free single crystal positive electrode material is easy to agglomerate in a dry coating process, resulting in poor coating uniformity. Moreover, the lack of cobalt in a cobalt-free material results in poor conductivity and a bad rate capability.

At present, no solution for improving the sheet-like cobalt-free single crystal positive electrode material has been reported.

Therefore, it is of great significance to study and develop a cobalt-free positive electrode material.

### SUMMARY

The following is a summary of the subject matter described in detail herein. This summary is not intended to limit the scope of the claims.

The present disclosure provides a cobalt-free positive electrode material, a method for preparing the same, a positive electrode of a lithium-ion battery and a lithium battery.

In an embodiment, the present disclosure provides a cobalt-free positive electrode material including a core and a shell coating the core, where the core is a cobalt-free positive electrode material and has a chemical formula of LiNiₓMn_{y}O₂, where 0.55 ≤ x ≤ 0.95 and 0.05 ≤ y ≤ 0.45; and the shell includes a coating agent and carbon.

In an embodiment provided by the present disclosure, the cobalt-free positive electrode material is not easy to agglomerate in a dry coating process and has good coating uniformity so that the conductivity of a cobalt-free single crystal positive electrode material can be improved.

In an embodiment, with reference to a total weight of the core, a content of the shell is 0.1-1.0% by weight, for example, 0.1% by weight, 0.2% by weight, 0.3% by weight, 0.5% by weight, 0.6% by weight, 0.8% by weight, 1.0% by weight or the like.

In an embodiment, the content of the shell is 0.3-1.0% by weight, for example, 0.3% by weight, 0.4% by weight, 0.5% by weight, 0.7% by weight, 0.8% by weight, 0.9% by weight, 1.0% by weight or the like.

In an embodiment, the coating agent is at least one of Al₂O₃ and ZrO₂.

In an embodiment, a content of the coating agent is 0.25-0.3% by weight, for example, 0.25% by weight, 0.28% by weight, 0.29% by weight, 0.30% by weight or the like; and a content of carbon is 0.35-0.45% by weight, for example, 0.35% by weight, 0.36% by weight, 0.38% by weight, 0.40% by weight, 0.41% by weight, 0.43% by weight, 0.45% by weight or the like.

In an embodiment, the positive electrode material is a single crystal material.

In an embodiment, the core is a single crystal material.

The material formed after the surface of the single crystal core is coated with the shell may also be considered as a single crystal material.

In an embodiment, the positive electrode material has an average particle size of 1-10 µm, for example, 1 µm, 2 µm, 3 µm, 4 µm, 5 µm, 6 µm, 8 µm, 10 µm or the like.

In an embodiment, the positive electrode material has an average particle size of 2-4 µm.

In an embodiment, the present disclosure provides a method for preparing the cobalt-free positive electrode material. The method includes:
(1) mixing a lithium salt and a precursor and performing a reaction to obtain a cobalt-free positive electrode material, where the precursor has a chemical formula of NiₓMn_{y}(OH)₂, where 0.55 ≤ x ≤ 0.95 and 0.05 ≤ y ≤ 0.45;
(2) mixing the cobalt-free positive electrode material, a coating agent and a conductive substance and performing calcination; and
(3) crushing the substance after step (2) to obtain the cobalt-free positive electrode material.

In an embodiment provided by the present disclosure, the addition of the conductive substance can improve the dispersibility of particles and a coating effect. Moreover, the preparation method is simple and can be applied on a large scale.

In an embodiment provided by the present disclosure, the method for preparing the cobalt-free positive electrode material can improve dispersibility in a coating process of the cobalt-free positive electrode material and the conductivity of the cobalt-free positive electrode material.

In an embodiment, in step (1), conditions of the reaction include a temperature of 800-1000 °C, for example, 800 °C, 820 °C, 840 °C, 850 °C, 880 °C, 900 °C, 925 °C, 950 °C, 1000 °C or the like, and a duration of 10-20 h, for example, 10 h, 12 h, 14 h, 15 h, 18 h, 19 h, 20 h or the like.

In an embodiment, in step (2), conditions of the calcination include a N₂ atmosphere, a temperature of 300-700 °C, for example, 300 °C, 400 °C, 500 °C, 550 °C, 600 °C, 700 °C or the like, and a duration of 5-10 h, for example, 5 h, 6 h, 7 h, 8.5 h, 9 h, 10 h or the like.

In an embodiment, in step (2), with reference to a total weight of the precursor, an amount of the lithium salt is 47-50% by weight, for example, 47% by weight, 48% by weight, 48.5% by weight, 49% by weight, 50% by weight or the like; an amount of the conductive substance is 0.105-0.525% by weight, for example, 0.105% by weight, 0.150% by weight, 0.200% by weight, 0.250% by weight, 0.300% by weight, 0.350% by weight, 0.400% by weight, 0.450% by weight, 0.500% by weight or the like; an amount of the cobalt-free positive electrode material is 105-108% by weight, for example, 105% by weight, 106% by weight, 107% by weight, 108% by weight or the like; and an amount of the coating agent is 0.21-0.525% by weight, for example, 0.21% by weight, 0.23% by weight, 0.30% by weight, 0.35% by weight, 0.40% by weight, 0.45% by weight or the like.

In an embodiment, with reference to the total weight of the precursor, the amount of the lithium salt is 47-48% by weight, for example, 47% by weight, 47.2% by weight, 47.5% by weight, 48% by weight or the like; the amount of the conductive substance is 0.315-0.525% by weight, for example, 0.315% by weight, 0.350% by weight, 0.400% by weight, 0.450% by weight, 0.480% by weight, 0.500% by weight or the like; the amount of the cobalt-free positive electrode material is 105-106% by weight, for example, 105% by weight, 105.2% by weight, 105.5% by weight, 106% by weight or the like; and the amount of the coating agent is 0.21-0.315% by weight, for example, 0.21% by weight, 0.25% by weight, 0.28% by weight, 0.3% by weight or the like.

In an embodiment, the conductive substance is selected from one or more of conductive carbon black, graphite and graphene.

In an embodiment, the conductive substance is conductive carbon black.

In an embodiment, the conductive substance has a specific surface area of 50-200 m²/g, for example, 50 m²/g, 60 m²/g, 80 m²/g, 90 m²/g, 100 m²/g, 120 m²/g, 150 m²/g, 180 m²/g, 200 m²/g or the like, and an average particle size of 50-500 nm, for example, 50 nm, 80 nm, 100 nm, 125 nm, 150 nm, 170 nm, 200 nm, 240 nm, 280 nm, 320 nm, 350 nm, 400 nm, 500 nm or the like.

In an embodiment, the coating agent is selected from at least one of Al₂O₃ and ZrO₂.

In an embodiment, the present disclosure provides a cobalt-free positive electrode material prepared by the method. The conductivity of the cobalt-free positive electrode material prepared by the method can be improved.

In an embodiment, the present disclosure provides a positive electrode of a lithium-ion battery. The positive electrode of a lithium-ion battery contains the cobalt-free positive electrode material.

In an embodiment, the present disclosure provides a lithium-ion battery. The lithium-ion battery includes a positive electrode and a negative electrode, where the positive electrode is the positive electrode of a lithium-ion battery.

### BRIEF DESCRIPTION OF DRAWINGS

The drawings are used to provide a further understanding of technical solutions of the present disclosure, constitute a part of the specification, explain the technical solutions of the present disclosure in conjunction with embodiments of the present application and do not limit the technical solutions of the present disclosure.
FIG. 1 shows a scanning electron microscope (SEM) image of a cobalt-free positive electrode material with no conductive substance in Comparative Example 1;
FIG. 2 shows a SEM image of a cobalt-free positive electrode material prepared in Example 1;
FIG. 3 shows initial charge and discharge curves of a material without carbon black in Comparative Example 1 and a cobalt-free positive electrode material prepared in Example 1; and
FIG. 4 shows cycle performance curves of a material without carbon black in Comparative Example 1 and a cobalt-free positive electrode material prepared in Example 1.

### Reference list

1, 3 and 5 each represent the material without carbon black in Comparative Example 1,
2, 4 and 6 each represent the cobalt-free positive electrode material prepared in Example 1.

### DETAILED DESCRIPTION

Technical solutions of the present disclosure are further described below through specific examples.

In an embodiment, the present disclosure provides a cobalt-free positive electrode material including a core and a shell coating the core, where the core is a cobalt-free positive electrode material and has a chemical formula of LiNiₓMn_{y}O₂, where 0.55 ≤ x ≤ 0.95 and 0.05 ≤ y ≤ 0.45; and the shell includes a coating agent and carbon.

Inventors of the present disclosure have found through experiments that in the related art, a cobalt-free positive electrode material is easy to agglomerate in a dry coating process due to a relatively small particle size, resulting in poor coating uniformity; and the conductivity of the cobalt-free positive electrode material cannot be improved.

In an embodiment provided by the present disclosure, the inventors mix a cobalt-free positive electrode material, a coating agent and a conductive substance and then perform calcination. The conductive substance having a relatively large specific surface area and a relatively small particle size can improve dispersibility in a coating process. Meanwhile, the conductive substance having good conductivity can improve the conductivity of the cobalt-free positive electrode material.

Additionally, in an embodiment of the present disclosure, the positive electrode material is a cobalt-free positive electrode material, where the cobalt-free positive electrode material is stable in structure, does not depend on a cobalt element, and has a lower cost than a cobalt-containing material.

It is to be noted that in an embodiment provided by the present disclosure, the cobalt-free positive electrode material belongs to a single crystal material, and it can be determined from SEM images that the cobalt-free positive electrode material in the embodiment of the present disclosure is a sheet-like cobalt-free single crystal positive electrode material.

In an embodiment, with reference to a total weight of the core, a content of the shell is 0.1-1.0% by weight.

In an embodiment, with reference to the total weight of the core, the content of the shell is 0.3-1.0% by weight.

In an embodiment provided by the present disclosure, the content of the shell is limited to the preceding range, which can improve the dispersibility in the coating process and the conductivity of the cobalt-free positive electrode material.

In an embodiment, the coating agent is at least one of Al₂O₃ and ZrO₂. This may also be expressed as "the coating agent is Al₂O₃ and/or ZrO₂".

In an embodiment, a content of the coating agent is 0.25-0.3% by weight and a content of carbon is 0.35-0.45% by weight.

In an embodiment, 0.55 ≤ x ≤ 0.8 and 0.2 ≤ y ≤ 0.45.

In an embodiment, x may be 0.75, 0.55, 0.8 or any value within a range formed by any two of these point values.

In an embodiment, y may be 0.2, 0.25, 0.45 or any value within a range formed by any two of these point values.

In an embodiment, x is 0.75 and y is 0.25.

In an embodiment, x + y = 1.

In an embodiment, the positive electrode material is a single crystal material.

In an embodiment, the positive electrode material has an average particle size of 1-10 µm.

In an embodiment, the positive electrode material has an average particle size of 2-4 µm.

In the present disclosure, it is to be noted that the "average particle size" refers to D50 of the positive electrode material.

In an embodiment, the "average particle size" is measured by a laser particle size analyzer.

In an embodiment, the present disclosure provides a method for preparing a cobalt-free positive electrode material. The method includes the steps below.
(1) A lithium salt and a precursor are mixed and a reaction is performed so that a cobalt-free positive electrode material is obtained, where the precursor has a chemical formula of NiₓMn_{y}(OH)₂, where 0.55 ≤ x ≤ 0.95 and 0.05 ≤ y ≤ 0.45.
(2) The preceding cobalt-free positive electrode material, a coating agent and a conductive substance are mixed and calcination is performed.
(3) The substance after step (2) is crushed so that the cobalt-free positive electrode material is obtained.

In an embodiment, in step (1), conditions of the reaction include a temperature of 800-1000 °C and a duration of 10-20 h.

In an embodiment, in step (1), the conditions of the reaction include a temperature of 900-1000 °C and a duration of 10-15 h.

In an embodiment, in step (2), conditions of the calcination include a N₂ atmosphere, a temperature of 300-700 °C and a duration of 5-10 h.

In an embodiment, in step (2), the conditions of the calcination include a temperature of 300-500 °C and a duration of 5-7 h.

In an embodiment, in steps (1) and (2), mixing is performed in a high-speed mixer.

In an embodiment, steps (1) and (2) are performed at a stirring rate of 800-1000 rpm.

In an embodiment, steps (1) and (2) are performed at a stirring rate of 900-1000 rpm.

In an embodiment, in step (2), with reference to a total weight of the precursor, an amount of the lithium salt is 47-50% by weight, an amount of the conductive substance is 0.105-0.525% by weight, an amount of the cobalt-free positive electrode material is 105-108% by weight, and an amount of the coating agent is 0.21-0.525% by weight.

In an embodiment, in step (2), with reference to the total weight of the precursor, the amount of the lithium salt is 47-48% by weight, the amount of the conductive substance is 0.315-0.525% by weight, the amount of the cobalt-free positive electrode material is 105-106% by weight, and the amount of the coating agent is 0.21-0.315% by weight.

In an embodiment, the conductive substance is selected from one or more of conductive carbon black, graphite and graphene.

In an embodiment, the conductive substance is conductive carbon black.

In an embodiment, the conductive carbon black is selected from one or more of acetylene black, Super P and Super S, where Super P and Super S are models. Specifically, Super P has a specific surface area of 120 m²/g and an average particle size of 55 nm, and Super S has a specific surface area of 80 m²/g and an average particle size of 125 nm.

In an embodiment, the conductive substance has a specific surface area of 50-200 m²/g and an average particle size of 50-500 nm.

In an embodiment, the conductive substance has a specific surface area of 100-200 m²/g.

In an embodiment, the conductive substance has an average particle size of 50-200 nm.

In an embodiment, the coating agent is selected from Al₂O₃ and/or ZrO₂.

In an embodiment, the lithium salt is LiOH and/or Li₂CO₃.

In an embodiment, in step (3), the material may be crushed through roll crushing and jet milling and then sieved to give the final product.

In an embodiment, the present disclosure provides a cobalt-free positive electrode material prepared by the preceding method.

In an embodiment, the present disclosure provides a positive electrode of a lithium-ion battery. The positive electrode of a lithium-ion battery contains the preceding cobalt-free positive electrode material.

In an embodiment, the present disclosure provides a lithium-ion battery. The lithium-ion battery includes a positive electrode and a negative electrode, where the positive electrode is the preceding positive electrode of a lithium-ion battery.

Typical but non-limiting examples of the present disclosure are described below.

In the following examples and comparative examples:
(1) A content of an element was tested by an ICP that was purchased from PerkinElmer Enterprise Management (Shanghai) Co., Ltd. and whose model was Avio 500.
(2) Surface morphology and dispersibility were tested by a SEM that was purchased from ZEISS in Germany and whose model was SUPRA 55VP.
(3) Initial charge/discharge performance and cycle performance were measured by testing an assembled button cell. The button cell was manufactured as follows:
   A positive electrode material, conductive carbon black and a binder polyvinylidene fluoride (PVDF) were mixed at a mass ratio of 92:4:4, and the mixture was made into a slurry with N-methylpyrrolidone (NMP) as a solvent, coated on an aluminum foil, and vacuum-dried at 90 °C so that a positive electrode sheet was obtained. A negative electrode sheet (lithium sheet), the positive electrode sheet, an electrolyte (LiPF₆ of 1 mol/L with ethylene carbonate (EC):ethyl methyl carbonate (EMC) = 1:1) and a separator were then assembled into a cell.
(4) Test of initial charge/discharge performance
   The resulting cell was subjected to a charge/discharge test in a 25±2 °C environment and at a charge/discharge voltage of 3.0-4.4 V and a current density of 0.1C/0.1C. Test of cycle performance after 50 cycles: The resulting cell was subjected to the charge/discharge test in a 25±2 °C environment and at a charge/discharge voltage of 3.0-4.4 V and a current density of 0.1C/0.1C (0.5 C for charge and 1C for discharge).
(5) The lithium salt was purchased from Ganfeng Lithium Co., Ltd.; the precursor was purchased from Jinchi Energy Materials Co., Ltd.; the coating agent was purchased from Evonik Specialty Chemicals (Shanghai) Co., Ltd.; and the conductive substance was purchased from Tianjin YouMeng Chemical Technology Co., Ltd.

### Example 1

This example provides a cobalt-free positive electrode material prepared by a method described below.
(1) LiOH (48 g) and a precursor NiₓMn_{y}(OH)₂ (100 g) (with x being 0.75 and y being 0.25) were mixed in a high-speed mixer at a stirring rate of 950 rpm and then reacted for 10 h at a high temperature of 950 °C so that a cobalt-free positive electrode material was synthesized.
(2) The cobalt-free positive electrode material (105 g), a coating agent (specifically Al₂O₃) (0.25 g) and conductive carbon black (0.35 g) with a specific surface area of 200 m²/g were mixed in the high-speed mixer at a stirring rate of 1000 rpm, and the mixed materials were heated for 5 h at 400 °C in a N₂ atmosphere, where with reference to a total weight of the precursor, an amount of the lithium salt was 48% by weight, an amount of the conductive substance was 0.35% by weight, an amount of the cobalt-free positive electrode material was 105% by weight, and an amount of the coating agent was 0.25% by weight.
(3) The preceding material was crushed through roll crushing and jet milling and sieved by a 300-400 mesh sieve.

The final product, which is a cobalt-free positive electrode material, was obtained. The positive electrode material was expressed as C₁-LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.6% by weight (where the content of the coating agent Al₂O₃ was 0.25% by weight and the content of carbon (the conductive carbon black) was 0.35% by weight). The coating layer was uniform.

### Example 2

This example provides a cobalt-free positive electrode material prepared by a method described below.
(1) LiOH (47 g) and a precursor NiₓMn_{y}(OH)₂ (100 g) (with x being 0.55 and y being 0.45) were mixed in a high-speed mixer at a stirring rate of 900 rpm and then reacted for 12 h at a high temperature of 980 °C so that a cobalt-free positive electrode material was synthesized.
(2) The cobalt-free positive electrode material (106 g), a coating agent (specifically ZrO₂) (0.30 g) and conductive carbon black (0.40 g) with a specific surface area of 120 m²/g were mixed in the high-speed mixer at a stirring rate of 980 rpm, and the mixed materials were heated for 6 h at 500 °C in a N₂ atmosphere, where with reference to a total weight of the precursor, an amount of the lithium salt was 47% by weight, an amount of the conductive substance was 0.40% by weight, an amount of the cobalt-free positive electrode material was 106% by weight, and an amount of the coating agent was 0.30% by weight.
(3) The preceding material was crushed through roll crushing and jet milling and sieved by a 300-400 mesh sieve.

The final product, which is a cobalt-free positive electrode material, was obtained. The positive electrode material was expressed as C₂-LiNi_{0.55}Mn_{0.45}O₂. The positive electrode material included a core and a shell coating the core, where the core was a cobalt-free positive electrode material and had a chemical formula of LiNi_{0.55}Mn_{0.45}O₂, and the shell included the coating agent and carbon. With reference to a total weight of the core, a content of the shell was 0.7% by weight (where the content of the coating agent ZrO₂ was 0.30% by weight and the content of carbon (the conductive carbon black) was 0.40% by weight). The coating layer was uniform.

### Example 3

This example provides a cobalt-free positive electrode material prepared by a method described below.
(1) LiOH (48 g) and a precursor NiₓMn_{y}(OH)₂ (100 g) (with x being 0.80 and y being 0.20) were mixed in a high-speed mixer at a stirring rate of 950 rpm and then reacted for 15 h at a high temperature of 900 °C so that a sheet-like cobalt-free single crystal positive electrode material was synthesized.
(2) The sheet-like cobalt-free single crystal positive electrode material (105.5 g), a coating agent (specifically Al₂O₃) (0.28 g) and conductive carbon black (0.45 g) with a specific surface area of 150 m²/g were mixed in the high-speed mixer at a stirring rate of 1000 rpm, and the mixed materials were heated for 7 h at 500 °C in a N₂ atmosphere, where with reference to a total weight of the precursor, an amount of the lithium salt was 48% by weight, an amount of the conductive substance was 0.45% by weight, an amount of the cobalt-free positive electrode material was 105.5% by weight, and an amount of the coating agent was 0.28% by weight.
(3) The preceding material was crushed through roll crushing and jet milling and sieved by a 300-400 mesh sieve.

The final product, which is a cobalt-free positive electrode material, was obtained. The positive electrode material was expressed as C₃-LiNi₀₈₀Mn_{0.20}O₂. The positive electrode material included a core and a shell coating the core, where the core was a cobalt-free positive electrode material and had a chemical formula of LiNi₀₈₀Mn_{0.20}O₂, and the shell included the coating agent and carbon. With reference to a total weight of the core, a content of the shell was 0.73% by weight (where the content of the coating agent Al₂O₃ was 0.28% by weight and the content of carbon (the conductive carbon black) was 0.45% by weight). A coating layer was uniform.

### Example 4

This example provides a cobalt-free positive electrode material prepared by a method described below.

The cobalt-free positive electrode material was prepared by the same method as that in Example 1 except the differences below.

In step (1), "LiOH" was replaced with "Li₂CO₃".

In step (2), "conductive carbon black with a specific surface area of 200 m²/g" was modified to "conductive carbon black with a specific surface area of 80 m²/g" and with reference to the total weight of the precursor, the amount of the lithium salt was 47% by weight, the amount of the conductive substance was 0.35% by weight, the amount of the cobalt-free positive electrode material was 105% by weight, and the amount of the coating agent was 0.25% by weight.

The final product, which is a cobalt-free positive electrode material, was obtained. The positive electrode material was expressed as C₄-LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.6% by weight (where the content of the coating agent Al₂O₃ was 0.25% by weight and the content of carbon (the conductive carbon black) was 0.35% by weight). The coating layer was uniform.

### Example 5

This example provides a cobalt-free positive electrode material prepared by a method described below.

The cobalt-free positive electrode material was prepared by the same method as that in Example 1 except the differences below.

In step (1), "reacted for 10 h at a high temperature of 950 °C" was modified to "reacted for 20 h at a high temperature of 880 °C".

In step (2), "heated for 5 h at 400 °C in a N₂ atmosphere" was modified to "heated for 8 h at 700 °C in a N₂ atmosphere".

The final product, which is a cobalt-free positive electrode material, was obtained. The positive electrode material was expressed as C₅-LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.6% by weight (where the content of the coating agent Al₂O₃ was 0.25% by weight and the content of carbon (the conductive carbon black) was 0.35% by weight). The coating layer was uniform.

### Comparative Example 1

A cobalt-free positive electrode material was prepared under the same conditions as those in Example 1 except a difference that conductive carbon black was not added in step (2).

The final product, which is a cobalt-free positive electrode material, was obtained. The positive electrode material was expressed as LiNi_{0.75}Mn_{0.25}O₂.

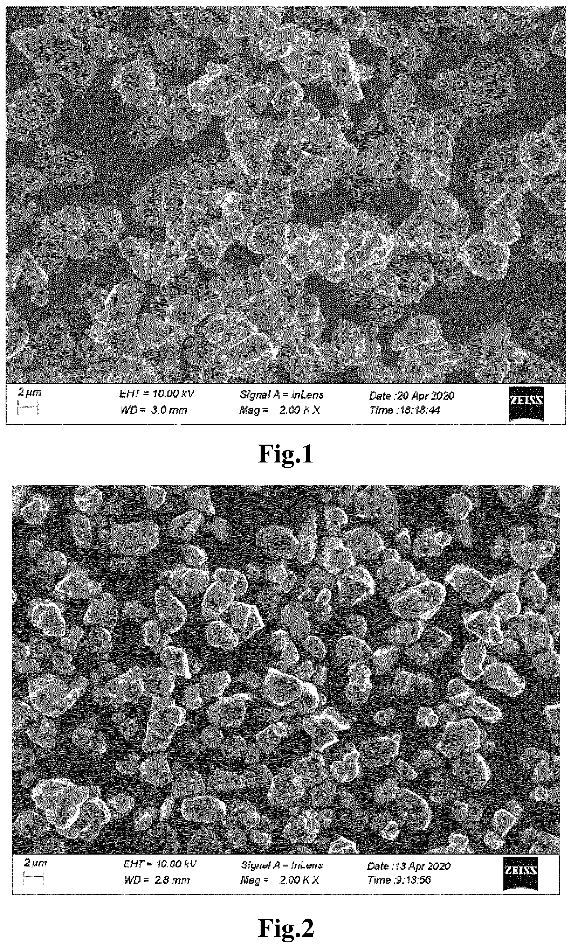

FIG. 1 shows a SEM image of the cobalt-free positive electrode material with no conductive substance in Comparative Example 1. FIG. 2 shows a SEM image of the cobalt-free positive electrode material prepared in Example 1. SEM test results in FIGs. 1 and 2 show that the cobalt-free positive electrode material added with carbon black in Example 1 in FIG. 2 has significantly better dispersibility than the cobalt-free positive electrode material with no conductive substance such as carbon black in FIG. 1. Additionally, as can be seen from FIG. 2, the cobalt-free positive electrode material is a single crystal material having an average particle size of 1-5 µm, for example, 2-4 µm.

Additionally, in the present disclosure, it is to be noted that in FIGs. 1 and 2, "ZEISS" is an identifier of a device manufacturer.

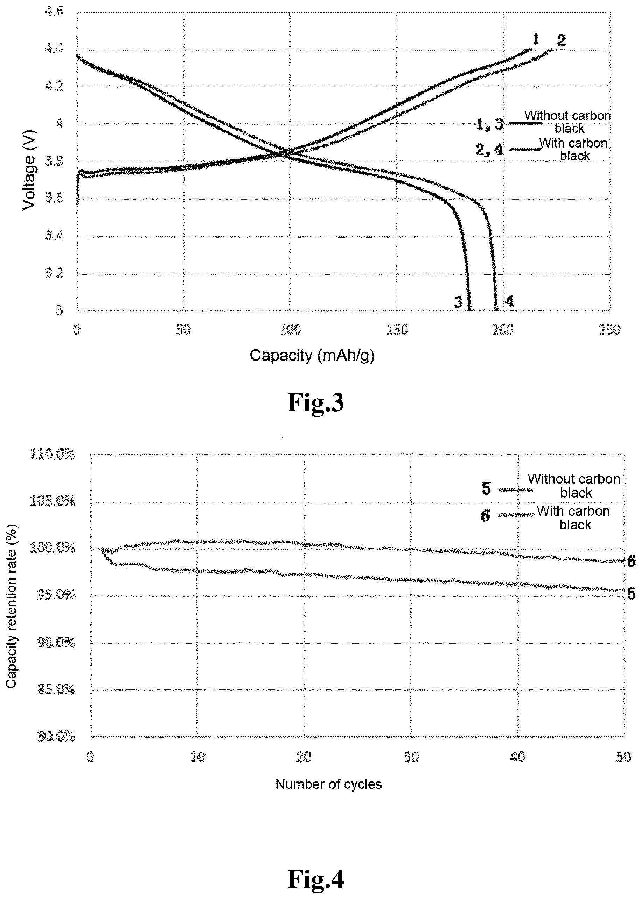

FIG. 3 shows initial charge and discharge curves of the material without carbon black in Comparative Example 1 and the cobalt-free positive electrode material prepared in Example 1. FIG. 3 shows the initial 0.1C/0.1C charge and discharge curves of the materials at 25 °C and a voltage of 3.0-4.4 V. As can be seen from FIG. 3, an initial specific charge capacity and an initial specific discharge capacity at 0.1C of the material without carbon black in Comparative Example 1 are 213.0 mAh/g and 184.1 mAh/g, respectively, and the initial charge/discharge efficiency is 86.38%; an initial specific charge capacity and an initial specific discharge capacity at 0.1C of the cobalt-free positive electrode material prepared in Example 1 are 222.6 mAh/g and 196.6 mAh/g, respectively, and the initial charge/discharge efficiency is 88.32%.

Therefore, the addition of carbon black in a coating process is conducive to improving the initial charge/discharge efficiency and specific discharge capacity of the material.

FIG. 4 shows cycle performance curves of the material without carbon black in Comparative Example 1 and the cobalt-free positive electrode material prepared in Example 1. FIG. 4 shows the cycle performance curves of the materials at 25 °C, a voltage of 3.0-4.4 V and at 0.5C/1C.

As can be seen from FIG. 4, the capacity retention rate of the material without carbon black in Comparative Example 1 is 95.7% after 50 cycles, and the capacity retention rate of the cobalt-free positive electrode material prepared in Example 1 is 98.8% after 50 cycles. The cycle performance is improved because the addition of carbon black in the coating process, such as Example 1, can improve the coating uniformity of the material, reduce a side reaction between the material and an electrolyte, and improve the conductivity of the material.

### Comparative Example 2

A cobalt-free positive electrode material was prepared by the same method as that in Example 1 except the differences below.

In step (2), with reference to the total weight of the precursor, the amount of the lithium salt was 48% by weight, the amount of the conductive substance was 0.08% by weight, the amount of the cobalt-free positive electrode material was 105% by weight, and the amount of the coating agent was 0.25% by weight.

The final product, which is a cobalt-free positive electrode material, was obtained. The positive electrode material was expressed as DC₂-LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.33% by weight (where the content of the coating agent Al₂O₃ was 0.25% by weight and the content of carbon (the conductive carbon black) was 0.08% by weight).

### Comparative Example 3

A cobalt-free positive electrode material was prepared by the same method as that in Example 1 except the differences below.

In step (1), "reacted for 10 h at a high temperature of 950 °C" was modified to "reacted for 8 h at a high temperature of 1100 °C".

In step (2), "heated for 5 h at 400 °C in a N₂ atmosphere" was modified to "heated for 12 h at 800 °C in a N₂ atmosphere".

The final product, which is a cobalt-free positive electrode material, was obtained. The positive electrode material was expressed as DC₃-LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.55% by weight (where the content of the coating agent Al₂O₃ was 0.20% by weight and the content of carbon (the conductive carbon black) was 0.35% by weight).

### Comparative Example 4

A cobalt-free positive electrode material was prepared under the same conditions as those in Example 1 except a difference that in step (2), common conductive carbon black, that is, carbon black without a large specific surface area, was added. Specifically, the common conductive carbon black had a specific surface area of 25 m²/g. In addition, in the present disclosure, the common conductive carbon black was purchased from Tianjin Xinglongtai Chemical Products Technology Co., Ltd., and its model was xlt-1.

The final product, which is a cobalt-free positive electrode material, was obtained. The positive electrode material was expressed as LiNi_{0.75}Mn_{0.25}O₂. The positive electrode material included a core and a shell coating the core, where the core was a cobalt-free positive electrode material and had a chemical formula of LiNi_{0.75}Mn_{0.25}O₂, and the shell included the coating agent and carbon. With reference to a total weight of the core, a content of the shell was 0.6% by weight (where the content of the coating agent Al₂O₃ was 0.25% by weight and the content of carbon (the conductive carbon black) was 0.35% by weight). However, the coating layer was not uniform.

### Test Example 1

N samples were prepared by the methods in Comparative Example 1 and Example 1, and three samples were randomly selected therefrom to be tested by an ICP. The results are shown by a comparison of ICP test results in Table 1.

**Table 1**

| | | | | |
|---|---|---|---|---|
| Comparative Example 1 | Test Item | 1 | 2 | 3 |
| | Li(%) | 7.08 | 7.29 | 6.92 |
| | Ni(%) | 43.68 | 43.96 | 44.09 |
| | Mn(%) | 14.36 | 14.45 | 13.96 |
| | Al(ppm) | 1342 | 1058 | 1125 |
| Example 1 | Test Item | 1 | 2 | 3 |
| | Li(%) | 7.26 | 7.31 | 7.27 |
| | Ni(%) | 43.39 | 43.74 | 43.11 |
| | Mn(%) | 14.11 | 14.17 | 14.12 |
| | Al(ppm) | 1423 | 1425 | 1450 |

As can be seen from Table 1, the material with carbon black in Example 1 is higher than the material without carbon black in Comparative Example 1 in terms of the uniformity of each of three elements, Ni, Mn and Al (coating agent).

Accordingly, n samples were prepared by the methods in Comparative Examples 2 to 4 and Examples 2 to 5, and three samples were randomly selected therefrom to be tested by the ICP. As a result, the materials with carbon black in Examples 2 to 5 are all higher than the materials without carbon black in Comparative Examples 2 to 4 in terms of the uniformity of each of the three elements, Ni, Mn and Al (coating agent).

### Test Example 2

The materials prepared in Comparative Examples 1 to 4 and Examples 1 to 5 were tested for rate capabilities. The results are shown in Table 2.

**Table 2**

| Sample | 1/3C | 0.5C | 1C | 2C | 3C | 4C |
|---|---|---|---|---|---|---|
| Comparative Example 1 | 178.6 | 173.3 | 164.5 | 153.2 | 148.4 | 138.6 |
| Comparative Example 2 | 183.8 | 177.5 | 169.8 | 160.3 | 152.0 | 147.4 |
| Comparative Example 3 | 174.0 | 168.8 | 160.6 | 150.5 | 144.0 | 133.9 |
| Comparative Example 4 | 180.3 | 175.6 | 166.9 | 155.4 | 150.3 | 144.1 |
| Example 1 | 187.5 | 181.9 | 173.1 | 162.7 | 157.2 | 150.9 |
| Example 2 | 171.6 | 164.8 | 160.5 | 150.2 | 145.4 | 139.6 |
| Example 3 | 191.0 | 185.4 | 176.8 | 169.6 | 165.1 | 154.8 |
| Example 4 | 182.1 | 176.5 | 168.4 | 158.9 | 150.2 | 145.0 |
| Example 5 | 179.3 | 174.8 | 166.5 | 155.7 | 147.2 | 142.6 |

| | | | | | | |
|---|---|---|---|---|---|---|
| Note: The unit of data in Table 2 is mAh/g. | | | | | | |

The following can be seen from the results in Table 2:
(1) It can be seen that after the addition of carbon black in the coating process in Example 1, the cobalt-free positive electrode material prepared in Example 1 has a significant improved rate capability at 1/3C to 4C. For example, the specific discharge capacity of the material with carbon black in Example 1 is increased to 173.1 mAh/g at 1C rate; and the specific discharge capacity of the material with carbon black in Example 1 reaches 150.9 mAh/g at 4C rate. On the contrary, the specific discharge capacity of the material without carbon black in Comparative Example 1 is only 164.5 mAh/g at 1C rate; and the specific discharge capacity of the material without carbon black in Comparative Example 1 is only 138.6 mAh/g at 4C rate. This proves that the rate capability is improved because carbon black has relatively good electron conductivity and the coating of carbon black can improve the electrochemical activity of the cobalt-free positive electrode material and thus improve the rate capability of the material.

Similarly, the cobalt-free positive electrode material C₄-LiNi_{0.75}Mn_{0.25}O₂ prepared in Example 4 under the condition that "conductive carbon black with a specific surface area of 200 m²/g" is modified to "conductive carbon black with a specific surface area of 80 m²/g" has a lower capacity and a worse rate capability than that in Example 1.

The cobalt-free positive electrode material C₅-LiNi_{0.75}Mn_{0.25}O₂ prepared in Example 5 under the conditions that "heated for 5 h at 400 °C in a N₂ atmosphere" is modified to "heated for 8 h at 700 °C in a N₂ atmosphere" and that with reference to the total weight of the core, the content of the shell is 0.6% by weight has a reduced capacity due to a high temperature in step (2).

The cobalt-free positive electrode material DC₂-LiNi_{0.75}Mn_{0.25}O₂ prepared in Comparative Example 2 and the cobalt-free positive electrode material prepared in Comparative Example 3 have lower capacities and worse rate capabilities than that in Example 1. Comparative examples show that the capacity increases as X increases and the capacity decreases as X decreases.

### Test Example 3

The materials prepared in Examples 2 to 5 and Comparative Examples 2 to 4 were subjected to initial charge/discharge tests at 25 °C, a voltage of 3.0-4.4 V and 0.1C/0.1C. The results are shown in Table 3.

### Test Example 4

The materials prepared in Examples 2 to 5 and Comparative Examples 2 to 4 were subjected to cycle performance tests at 25 °C, a voltage of 3.0-4.4 V and 0.5C/1C. The results are shown in Table 3.

**Table 3**

| | Initial Specific Charge Capacity (mAh/g) at 0.1C | Initial Specific Discharge Capacity (mAh/g) at 0.1C | Initial Charge/Dischar ge Efficiency (%) | Capacity Retention Rate (%) after 50 Cycles |
|---|---|---|---|---|
| Example 2 | 195.5 | 178.4 | 91.2 | 98.4 |
| Example 3 | 227.8 | 195.9 | 86.0 | 94.3 |
| Example 4 | 217.4 | 190.4 | 87.6 | 96.5 |
| Example 5 | 214.5 | 187.5 | 87.4 | 95.8 |
| Comparative Example 2 | 214.7 | 188.3 | 87.7 | 97.2 |
| Comparative Example 3 | 210.4 | 180.7 | 85.9 | 93.9 |
| Comparative Example 4 | 215.8 | 187.0 | 86.6 | 96.2 |

The following can be seen from the results in Table 3:
The results of Examples 2 and 3 show that the cycle performance decreases when X is greater than 0.75. The results of Examples 4 and 5 show that a conductive agent with a large specific surface area and suitable reaction conditions (first calcination) and calcination conditions (second calcination) such as the temperature are conducive to improving the cycle performance.

For the material prepared in Comparative Example 3, since the temperatures among the reaction conditions (first calcination) and calcination conditions (second calcination) are too high, part of the coating agent enters the interior of the main material and the content of the shell is reduced. Since conductive carbon black with a relatively small specific surface area is used in Comparative Example 4, the coating layer is not uniform. The results of Comparative Examples 2 to 4 show that too small amount of the conductive agent, too high temperatures among the reaction conditions (first calcination) and calcination conditions (second calcination) and a relatively small conductive agent are not conducive to improving the cycle performance of the cobalt-free material.

In summary, the present disclosure can improve the dispersibility of particles and a coating effect through the addition of the conductive substance. The conductivity of the cobalt-free positive electrode material prepared by the method can be improved. Additionally, the preparation method is simple and can be applied on a large scale.

## Claims

1. A cobalt-free positive electrode material comprising a core and a shell coating the core, wherein the core is a cobalt-free positive electrode material and has a chemical formula of LiNiₓMn_{y}O₂, wherein 0.55 ≤ x ≤ 0.95 and 0.05 ≤ y ≤ 0.45; and the shell comprises a coating agent and carbon.

2. The positive electrode material according to claim 1, wherein with reference to a total weight of the core, a content of the shell is 0.1-1.0% by weight.

3. The positive electrode material according to claim 2, wherein with reference to the total weight of the core, a content of the shell is 0.3-1.0% by weight.

4. The positive electrode material according to any one of claims 1 to 3, wherein the coating agent is at least one of Al₂O₃ and ZrO₂.

5. The positive electrode material according to any one of claims 1 to 4, wherein a content of the coating agent is 0.25-0.3% by weight and a content of carbon is 0.35-0.45% by weight.

6. The positive electrode material according to any one of claims 1 to 5, wherein the positive electrode material is a single crystal material.

7. The positive electrode material according to any one of claims 1 to 6, wherein the positive electrode material has an average particle size of 1-10 µm.

8. The positive electrode material according to claim 7, wherein the positive electrode material has an average particle size of 2-4 µm.

9. A method for preparing a cobalt-free positive electrode material, comprising:
(1) mixing a lithium salt and a precursor and performing a reaction to obtain a cobalt-free positive electrode material, wherein the precursor has a chemical formula of NiₓMn_{y}(OH)₂, wherein 0.55 ≤ x ≤ 0.95 and 0.05 ≤ y ≤ 0.45;
(2) mixing the cobalt-free positive electrode material, a coating agent and a conductive substance and performing calcination; and
(3) crushing the substance after step (2) to obtain the cobalt-free positive electrode material.

10. The method according to claim 9, wherein in step (1), conditions of the reaction comprise a temperature of 800-1000 °C and a duration of 10-20 h.

11. The method according to claim 9 or 10, wherein in step (2), conditions of the calcination comprise a N₂ atmosphere, a temperature of 300-700 °C and a duration of 5-10 h.

12. The method according to any one of claims 9 to 11, wherein in step (2), with reference to a total weight of the precursor, an amount of the lithium salt is 47-50% by weight, an amount of the conductive substance is 0.105-0.525% by weight, an amount of the cobalt-free positive electrode material is 105-108% by weight, and an amount of the coating agent is 0.21-0.525% by weight.

13. The method according to claim 12, wherein with reference to the total weight of the precursor, the amount of the lithium salt is 47-48% by weight, the amount of the conductive substance is 0.315-0.525% by weight, the amount of the cobalt-free positive electrode material is 105-106% by weight, and the amount of the coating agent is 0.21-0.315% by weight.

14. The method according to any one of claims 9 to 13, wherein the conductive substance is selected from one or more of conductive carbon black, graphite and graphene.

15. The method according to claim 14, wherein the conductive substance is conductive carbon black.

16. The method according to any one of claims 9 to 15, wherein the conductive substance has a specific surface area of 50-200 m²/g and an average particle size of 50-500 nm.

17. The method according to any one of claims 9 to 15, wherein the coating agent is selected from Al₂O₃ and/or ZrO₂.

18. A cobalt-free positive electrode material prepared by the method according to any one of claims 9 to 17.

19. A positive electrode of a lithium-ion battery comprising the cobalt-free positive electrode material according to any one of claims 1 to 8 and 18.

20. A lithium-ion battery comprising a positive electrode and a negative electrode, wherein the positive electrode is the positive electrode of a lithium-ion battery according to claim 19.
